# EUROPÄISCHE PATENTSCHRIFT

(11) **EP 3 172 462 B1**
(45) Veröffentlichungstag und Bekanntmachung des Hinweises auf die Patenterteilung: **23.09.2020**
(21) Anmeldenummer: 15741985.4
(22) Anmeldetag: 22.07.2015
(51) Int. Cl.: F16H 57/04

(54) **VORRICHTUNG ZUR KONDITIONIERUNG DES SCHMIERÖLS EINER DREHMOMENTÜBERTRAGUNGSEINRICHTUNG**
DEVICE FOR CONDITIONING THE LUBRICATING OIL OF A TORQUE TRANSMISSION DEVICE
DISPOSITIF DE CONDITIONNEMENT DE L'HUILE DE LUBRIFICATION D'UN DISPOSITIF DE TRANSMISSION DE COUPLE

(30) Priorität: 25.07.2014 DE 102014011096
(43) Veröffentlichungstag der Anmeldung: 31.05.2017
(73) Patentinhaber: Audi AG, 85045 Ingolstadt (DE)
(72) Erfinder: KOPP, Andreas, 85092 Kösching (DE); PARENTI, Riccardo, 40010 Sala Bolognese (IT)
(74) Vertreter: Lehle, Josef
(86) Internationale Anmeldenummer: PCT/EP2015/066760
(87) Internationale Veröffentlichungsnummer: WO 2016/012498

(56) Entgegenhaltungen:
- EP-A2- 0 785 379
- DE-A1- 10 136 171
- DE-A1-102008 020 646
- DE-C- 907 724
- DE-C1- 10 016 640
- DE-C1- 19 923 184

## Beschreibung

Die Erfindung betrifft eine Vorrichtung zur Konditionierung des Schmieröls einer Drehmomentübertragungseinrichtung für Kraftfahrzeuge gemäß dem Oberbegriff des Patentanspruchs 1.

Fahrzeuggetriebe sowie -differentiale an der Vorder- sowie an der Hinterachse werden mittels Ölen, in speziellen Getriebeölen, geschmiert. Das Öl hat hierbei unterschiedliche Aufgaben: Teils wird es zur Betätigung von Steuerelementen, zur Kraftübertragung (Drehmomentwandler), zur Schmierung der sich berührender Zahnflanken und zum Wärmetransport innerhalb des Getriebes verwendet. Die Öle benetzen die metallischen Oberflächen und deren entsprechenden Kontaktflächen der Zahnradpaarungen im Getriebe. Hierdurch wird ein Kaltverschweißen der Kontaktflächen verhindert. Somit ist es wichtig genügend Öl an die entsprechenden sich berührenden Zahnflanken zu bringen. Bei tauchgeschmierten Getrieben stehen ein oder mehrere Zahnräder dabei in dem sogenannten Ölsumpf. Das Durchkämmen der Zahnräder in diesen Ölsumpf fördert Öl mit und gelangt somit an die sich berührenden Zahnflanken. Hierbei entstehen Plansch- Verluste durch das Durchkämmen der Zahnräder im Öl und ÖI-Quetsch-Verluste in den Bereichen, in denen die verschiedenen Zahnräder ineinander greifen. Verursacht durch das Wegdrücken des Öl an den Zahnflanken und Zahnzwischenräumen.

Aus der DE 10 2008 057 510 A1 ist eine Vorrichtung bekannt, bei der das Getriebeöl eines Geschwindigkeits-Wechselgetriebes mit integriertem Differenzial beheizt wird, um Reibungs- und Planschverluste der Getriebeelemente insbesondere im kalten Zustand des Getriebeöls zu reduzieren. Das ringförmige Heizelement ist dabei um eine Getriebewelle herum derart angeordnet, dass es teilweise in den Ölsumpf des Getriebes einragt und zudem durch Spritzöl eines benachbarten Zahnrads benetzt wird. Die möglichst effiziente Heizwirkung ist dabei wie bei anderen bekannten Vorrichtungen darauf ausgerichtet, das im Ölsumpf befindliche Getriebeöl in seiner Gesamtheit zu erwärmen.

Aus der DE 10 2008 020 646 A1 ist eine Achstemperatursteuervorrichtung bekannt. Aus der EP 0 785 379 A2 ist ein Getriebekühlsystem bekannt. Die DE 199 23 184 C1 offenbart ein Gehäuse für ein Achsgetriebe für ein Fahrzeug. Aus der DE 101 36 171 A1 ist eine Brennkraftmaschine bekannt. Die DE 100 16 640 C1 offenbart ein gattungsgemäßes Getriebe für ein Kraftfahrzeug mit einer Heizeinrichtung zur Erwärmung von Getriebeöl. Aus der DE 907 724 C ist eine Zuteilvorrichtung für konsistente Schmierstoffe bekannt.

Aufgabe der Erfindung ist es, eine Vorrichtung der gattungsgemäßen Art vorzuschlagen, die bei einer baulich einfachen Konstruktion eine besonders schnell einsetzende Verminderung von Reib- und/oder Planschverlusten in Drehmomentübertragungseinrichtungen ermöglicht.

Die Lösung dieser Aufgabe gelingt mit den im Patentanspruch 1 aufgeführten Merkmalen. Vorteilhafte Weiterbildungen der Vorrichtung sind Gegenstand der Unteransprüche.

Die Erfindung beruht auf dem Sachverhalt, dass die zuvor angesprochenen Plansch- und Quetschverluste in direktem Kontakt zwischen Öl und Zahnrad entstehen. Der Grundgedanke der Erfindung besteht darin, ein oder mehrere Flächenheizungen in den Beölungsfluß an den Zahnräder zu bringen. Hierdurch wird aufgrund der einsetzenden Zwangsströmung der kämmenden Zahnräder im Öl die entstehende Wärmeentwicklung der Heizelemente mitgetragen. Für den Wärmetransport ist keine Pumpe nötig. Ferner kann somit zielgerichtet, hocheffizient und schnell der eigentliche Bereich des Beölungsflusses beheizt werden, der verantwortlich für die Planschverluste ist. Durch den thermischen Anstieg des Öles im Bereich des Zahnrades sinken die Plansch-Verluste. Somit wird nun zudem zielgerichtet auch das dünne niedrigviskose Öl über die Zähne an den Zahnradverbindungen getragen und dadurch die Quetschverluste reduziert. Da zudem der beheizte Beölungsfluß ein verhältnismäßiges geringes Volumen zu dem gesamten Ölraum besitzt, stellt diese Idee gegenüber dem Stand der Technik ein sehr effizientes, energiesparendes System zur thermischen Wirkungsgradverbesserung von Getrieben dar.

Vor diesem Hintergrund ist gemäß dem Patentanspruch 1 zumindest ein Heizelement unmittelbar im Beölungsfluss der Getriebeelemente angeordnet. Die Erfindung zielt darauf ab, durch eine entsprechende Anordnung des zumindest einen Heizelements nicht das Schmieröl im Allgemeinen, sondern unmittelbar den Beölungsfluss am Getriebeelement aufzuheizen; die Erwärmung wirkt sich somit örtlich direkt am Getriebeelement aus und vermindert hier wirksam und schnell einsetzend die Reib- und/oder Planschverluste. Als Drehmomentübertragungseinrichtungen sind hier insbesondere Geschwindigkeits-Wechselgetriebe oder Zahnradtriebe jeglicher Bauart, Differenzialgetriebe, Drehmomentwandler, etc. zu verstehen.

Für den verbesserten Wärmeeintrag innerhalb des Zwangs-Ölflusses kann - um das wirkende Heizelement - auch ein gut wärmeleitendes Bauteil angebracht sein, durch dessen Hilfe eine gleichmäßigere Wärmeverteilung innerhalb des Beölungsflusses stattfindet. Anwendbar ist diese Idee bei sämtlichen Getrieben wie auch Differentialen.

Ergänzend kann durch eine entsprechende getaktete oder geringe Energiezufuhr an das Heizelement eine Erwärmung des Öles auch bei stehendem Getriebe erfolgen. Dies ist besonders bei Plug-In Antrieb-Systemen von Vorteil, um schon zu Startbeginn - besonders bei niedrigen Getriebeöltemperaturen - einen wirkungsgradoptimierten Betrieb des Getriebes zu gewährleisten.

Eine nicht von der Erfindung umfasste Vergleichsform zur zielgerichteten Reduzierung von Quetschverlusten kann bei Getrieben mit Trockensumpf wie folgt aussehen: Bei Trockensumpfgetrieben wird mittels einer Pumpe das Getriebeöl aus dem sich gesammelten Ölsumpf zum Beispiel in einen höher liegenden Behälter (Sammelraum) gepumpt. Durch entsprechend liegende Öffnungen tropft dann das Öl von oben auf die Zahnradpaarungen und beölt die in sich greifenden Zahnflanken. Bei dieser Art der Schmierung werden durch das Absenken des Ölsumpfes die Planschverluste zwar reduziert, die Quetschverluste an den Zahnflanken bleiben erhalten. Die Idee ist hierbei wiederum den zwangsbedingten Ölfluß zu nutzen, diesmal die Gravität, und in den Sammelraum ein oder mehrere Heizelemente anzubringen an denen das herablaufende Öl sich erwärmt und somit die Viskosität des herabtropfenden Öles reduziert. Hierdurch werden die Quetschverluste an den ineinander greifenden Zahnräder entscheidend reduziert. Hierbei kann auch alternativ der Sammelraum mit Heizlanzen versehen sein, an denen das Öl herabläuft, sich gleichzeitig erwärmt und dann auf die entsprechenden Beölungspunkte tropft. Nachfolgend sind einzelne Erfindungsaspekte nochmal im Detail hervorgehoben: So kann bevorzugt bei Zahnradgetrieben mit zumindest einem in einen Ölsumpf eintauchenden Getriebeelement das Heizelement in den im Ölsumpf sich zwangsläufig um das Getriebeelement bildenden Ölstrom (Beölungsfluss) positioniert sein. Insbesondere kann das Heizelement im Eintauchbereich des Getriebeelements in den Ölsumpf angeordnet sein, wodurch das über das Heizelement erwärmte Öl effizient an dem Getriebeelement entlang und unmittelbar in die Eingriffsbereiche transportiert wird. Eine separate Pumpe kann dadurch gegebenenfalls entfallen.

Des Weiteren wird vorgeschlagen, dass bei einem Zahnradtrieb mit einem in den Ölsumpf eintauchenden Zahnrad mit einem definierten Radius R das Heizelement innerhalb eines Abstands 1,3 x R, insbesondere ca. 1,15 x R, positioniert ist, um eine wirkungsvolle Einbringung der Heizwirkung in den Getriebeölstrom sicherzustellen. Der Abstand 1,3 x R definiert dabei den Bereich, bis zu dem sich Planschverluste auswirken können und der demzufolge besonders relevant für eine örtliche Beheizung des Getriebeöls ist.

In der Fachliteratur (siehe Dissertation Dipl.-Ing. Dirk Strasser Bochum 2005, und Veröffentlichungen Mauz /M2) ist der für die Planscheffekte relevante Umspülungsbereich oder Beölungsfluß um die Zähne eines Zahnrades im Bereich von bis zu 1,3 x R definiert. Hierbei ist R der Radius des in den Ölsumpf eintauchenden Zahnrad. Somit ist es besonders sinnvoll die Heizelemente innerhalb dieses radialen Abstandes der eintauchenden Zahnräder unterzubringen.

Ferner kann besonders bevorzugt das zumindest eine Heizelement bis zum Erreichen einer definierten Betriebstemperatur des Schmieröls elektrisch beheizt sein; die schnell einsetzende, elektrische Beheizung ist wirkungsvoll möglich, weil hier gezielt die bei einer baulich einfachen Gestaltung des Heizelements zur Verfügung stehende Wärmekapazität nur in den unmittelbaren Schmierölstrom am Getriebeelement einzubringen ist und erst sekundär den gesamten Ölsumpf beheizt.

In vorteilhafter Ausgestaltung der Erfindung können sowohl bei Differenzialgetrieben für Kraftfahrzeuge (zum Beispiel an der Vorderachse und/oder an der Hinterachse) mit einem in einen Ölsumpf eintauchenden Zahnrad als auch bei Geschwindigkeits-Wechselgetrieben mit in einen Ölsumpf eintauchenden Zahnradsätzen wie vorbeschrieben ein oder mehrere Heizelemente vorgesehen sein.

In einer nicht von der Erfindung umfassten Vergleichsform können die Heizelemente durch in den Ölsumpf einragende, im Wesentlichen punktuell wirkende Heizstäbe gebildet sein.

In einer Ausgestaltung der Erfindung sind die Heizelemente durch flächige, im Beölungsfluss liegende und strömungsgünstig ausgebildete Heizkörper ausgeführt. Diese sind durch parallel zur Ölströmungsrichtung gekrümmte und über einen Umfangsbereich des eintauchenden Getriebeelements verlaufende Leitschaufeln gebildet, die gegebenenfalls im Querschnitt gesehen ein strömungsdynamisch günstiges Tragflächenprofil aufweisen können.

In einer nicht von der Erfindung umfassten Vergleichsform kann bei einem Zahnradgetriebe mit Trockensumpfschmierung und zumindest einer Beölungseinrichtung oberhalb der Getriebeelemente, die das Getriebeöl den Getriebeelementen im Eingriffsbereich zuführen, das zumindest eine Heizelement unmittelbar an der Zuführeinrichtung angeordnet sein. Bei derartigen Getrieben treten zwar im Wesentlichen keine Planschverluste auf, jedoch bewirkt das kalte, zähflüssige Schmieröl in den Eingriffsbereichen in bekannter Weise Quetsch- bzw. Reibungsverluste, die durch die schnell einsetzende, örtliche Erwärmung des Schmieröls unmittelbar im Beölungsstrom bzw. an der Zuführeinrichtung gezielt reduzierbar sind.

In einer nicht von der Erfindung umfassten Vergleichsform kann die Zuführeinrichtung eine von einem Ölsammelraum oberhalb der Getriebeelemente abzweigende Ölleitung sein, die als elektrisches Heizelement ausgebildet ist.

In einer nicht von der Erfindung umfassten Vergleichsform kann die Ölleitung als Heizlanze ausgeführt sein, an der das zugeführte Schmieröl durch Schwerkraft nach unten entlang strömt und oberhalb des Eingriffsbereichs der Getriebeelemente auf diese abtropft.

Mehrere Ausführungsbeispiele der Erfindung sind im Folgenden anhand der beigefügten, schematischen Zeichnung näher erläutert. Es zeigen:
- Fig. 1: einen Querschnitt durch einen Zahnradsatz eines Geschwindigkeits-Wechselgetriebes für Kraftfahrzeuge mit einem in einen Ölsumpf eintauchenden Zahnrad, an dessen Eintauchbereich ein elektrischer Heizstab als Vorrichtung zur örtlichen Beheizung des Getriebeöls im Beölungsstrom vorgesehen ist;
- Fig. 2: die Vorrichtung nach Fig. 1, mit einem flächigen, im Querschnitt als Tragflächenprofil ausgeführten Heizelement;
- Fig. 3: eine alternative Ausgestaltung der Vorrichtung nach Fig. 1, mit einer parallel zum eintauchenden Umfangsabschnitt des Zahnrads gekrümmten Leitschaufel als Heizelement;
- Fig. 4: das Tellerrad mit Antriebsritzel eines Kegelrad-Achsdifferenzials für Kraftfahrzeuge, mit einem im Eintauchbereich des Tellerrads in einen Ölsumpf angeordneten Heizelement zum örtlichen Aufheizen des Getriebeöls; und
- Fig. 5: eine Anordnung einer nicht von der Erfindung umfassten Vergleichsform zum örtlichen Beheizen des Getriebeöls an einem Zahnradtrieb eines Wechselgetriebes für Kraftfahrzeuge mit einer Trockensumpfschmierung.

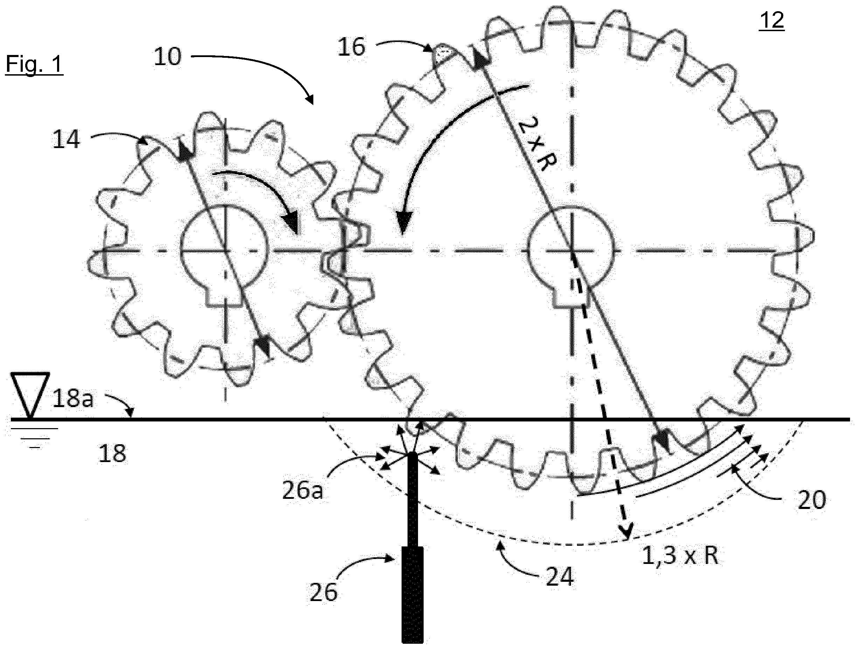

In der Fig. 1 ist nur soweit wie für das Verständnis der vorliegenden Erfindung erforderlich eine Drehmomentübertragungseinrichtung bzw. ein Zahnradtrieb 10 dargestellt, mit zwei miteinander kämmenden und in einem Getriebegehäuse 12 drehbar gelagerten Zahnrädern 14, 16, von denen das größere Zahnrad 16 in einen im Getriebegehäuse 12 befindlichen Ölsumpf 18 mit einer definierten Eintauchtiefe einragt.

Der Zahnradtrieb 10 kann beispielsweise ein Vorgelege oder ein Zahnradsatz eines Geschwindigkeits-Wechselgetriebes (Schaltgetriebes) für Kraftfahrzeuge sein.

Der Niveaustand 18a des durch Getriebeöl (oder ein anderes Schmiermittel) gebildeten Ölsumpfs 18 ist derart ausgelegt, dass das eintauchende Zahnrad 16 genügend Getriebeöl mitführt und dass u.a. die Kontaktbereiche der drehmomentübertragenden Zähne der Zahnräder 14, 16 ausreichend geschmiert werden.

Neben den dabei entstehenden Quetsch- und Reibungsverlusten insbesondere bei zähflüssigem, kaltem Getriebeöl treten Panschverluste beim Zahnrad 16 im Ölsumpf 18 auf, wobei sich - wie durch Strömungspfeile 20 dargestellt - ein Beölungsfluss ausbildet, der bei regulärer Drehrichtung des Zahnradtriebs 10 bzw. des Zahnrads 16 zwischen dem Eintauchpunkt bei 22 und dem Austauchen der Zähne des Zahnrads 16 liegt und der sich radial vom Zahnrad 16 weg zunehmend abbaut.

In der Fig. 1 ist der relevante Bereich des die Planschverluste verursachenden Beölungsflusses durch die gestrichelte Linie 24 eingegrenzt und beträgt ca. 1,3 x R des Zahnrads 16.

In das Getriebegehäuse 12 des Zahnradtriebs 10 ist ein Heizelement bzw. ein elektrischer Heizstab 26 eingesetzt, dessen punktuell beheizbare Spitze 26a in Nähe des Eintauchpunktes 22 mit einem Abstand 1,15 x R bzw. etwa mittig in den radial durch die Linie 24 eingegrenzten Beölungsfluss einragt.

Der Heizstab 26, der in seiner Konstruktion handelsüblicher Bauart sein kann, wird bei unterhalb einer definierten Betriebstemperatur des Getriebeöls liegender Temperatur elektrisch angesteuert und beheizt örtlich in dem Bereich innerhalb der Linie 24 das Getriebeöl derart, dass durch dessen schnelle Erwärmung die Reibungs-, Quetsch- und Planschverluste vermindert bzw. der Wirkungsgrad des Getriebes 10 erhöht ist.

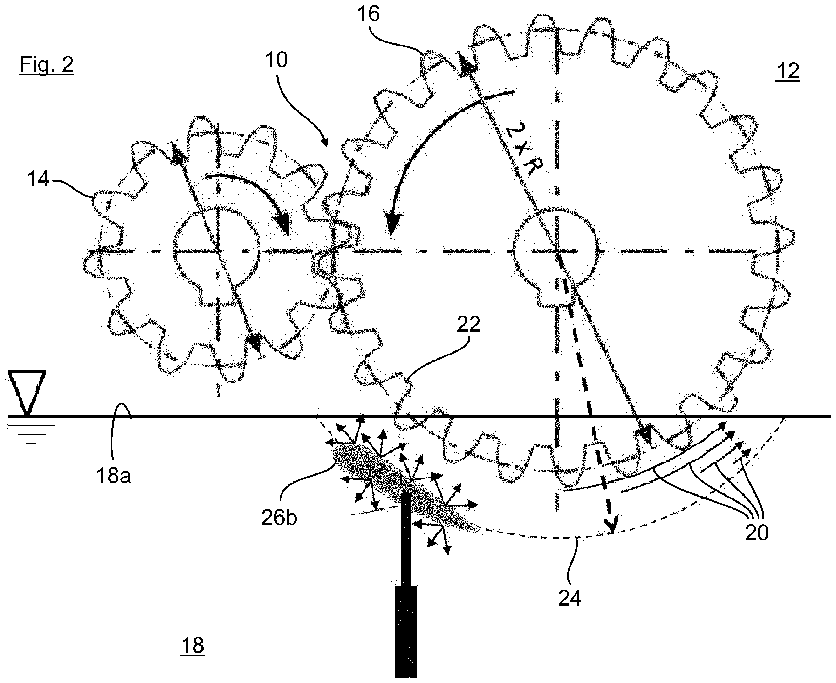

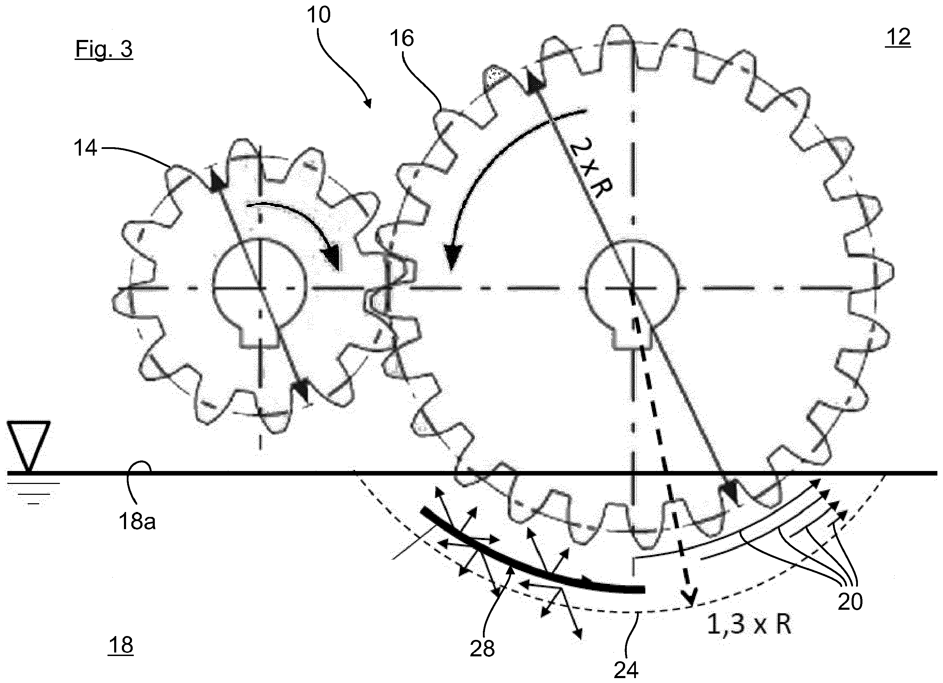

Die Fig. 2 und 3 zeigen alternative Ausgestaltungen des Heizelements des im Übrigen unveränderten Zahnradtriebs 10. Funktionell gleiche Teile sind mit gleichen Bezugszeichen versehen.

Gemäß Fig. 2 ist an dem Heizstab 26' an dessen Spitze 26a ein wärmeleitender, flächiger Heizkörper 26b befestigt, der im Querschnitt betrachtet in einem strömungsgünstigen Tragflächenprofil (oder einer Tropfenform) ausgeführt ist und der zum Beispiel eine Breite aufweisen kann, die der Breite des Zahnrads 16 entspricht. Die damit erzielte Oberflächenvergrößerung des Heizelements 26' kann eine noch schnellere, örtliche Erwärmung des Getriebeöls innerhalb des Beölungsflusses bzw. innerhalb des Bereiches 1,3 x R (Linie 24) am Zahnrad 15 sicherstellen.

In der Fig. 3 ist bei dem Zahnradtrieb 10 an Stelle des Heizelements 26 ein elektrisches Heizelement in Form einer Leitschaufel 28 eingesetzt, die ortsfest befestigt sich etwa parallel und über einen definierten Umfangsbereich des in den Ölsumpf 18 eintauchenden Zahnrads 16 erstreckt und die ebenfalls, wie zur Fig. 1 beschrieben, im Beölungsfluss innerhalb der Linie 24 positioniert ist.

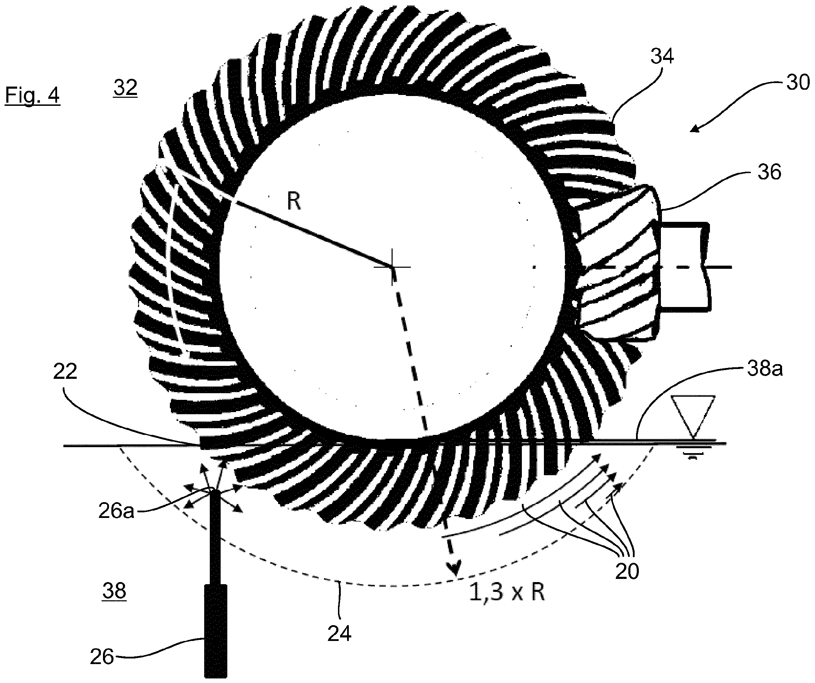

Die Fig. 4 zeigt ein weiteres Ausführungsbeispiel der Erfindung an einem nur teilweise dargestellten Differenzialgetriebe 30 für Kraftfahrzeuge. Das Differenzialgetriebe 30 kann beispielsweise ein vielfach bekanntes Kegelraddifferenzial sein, dessen verzahntes und in einem Differenzialgehäuse 32 drehbar gelagertes Zahnrad bzw. Tellerrad 34 über ein Antriebsritzel 36 antreibbar ist.

Zur Schmierung der dargestellten Verzahnung zwischen Tellerrad 34 und Antriebsritzel 36 (und weiterer Getriebeelemente) taucht das Tellerrad 34 in einen im Differenzialgehäuse 32 gebildeten Ölsumpf 38 mit einer Füllhöhe 38a ein.

Dabei bildet sich wiederum, wie zur Fig. 1 vorbeschrieben, ein Beölungsfluss aus, der sich vom Eintauchpunkt 22 des Tellerrads 34 zum Austrittspunkt erstreckt und der sich etwa in einem radialen Abstand von 1,3 x R des Tellerrads 34 auswirkt.

Analog zur Fig. 1 ist in diesem durch die Linie 24 eingegrenzten Bereich und in Nähe des Eintauchpunktes 22 ein Heizelement bzw. ein Heizstab 26 ortsfest eingesetzt, mittels dem punktuell das Getriebeöl im Beölungsfluss örtlich beheizbar ist.

Der Heizstab 26 kann auch gemäß Fig. 2 mit einem Heizkörper 26b kombiniert oder gemäß Fig. 3 als Leitschaufel 28 ausgeführt sein.

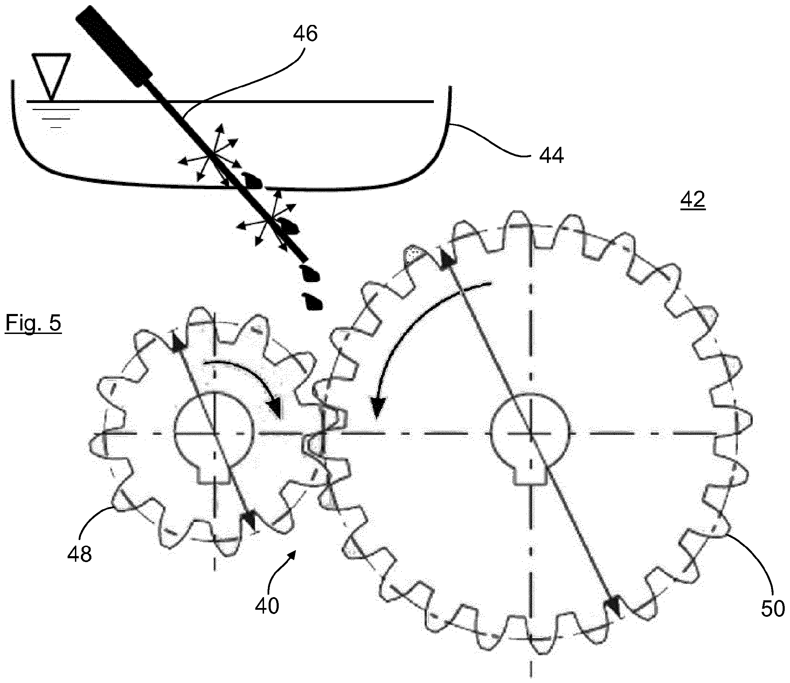

Die Fig. 5 schließlich zeigt eine nicht von der Erfindung umfasste Vergleichsform an einem Zahnradtrieb 40 zum Beispiel für ein Geschwindigkeits-Wechselgetriebe (oder zum Beispiel einen Steuerungstrieb für Brennkraftmaschinen) von Kraftfahrzeugen mit einer bekannten Trockensumpfschmierung zur Vermeidung von Planschverlusten an den Getriebeelementen.

Dabei wird das Schmieröl aus dem Getriebegehäuse 42 ständig abgesaugt und in eine geodätisch höher liegende Zuführeinrichtung mit einem Sammelbehälter 44 gepumpt.

Von dort kann das Schmieröl über zumindest eine Zuführleitung 46 an die Schmierstellen bzw. hier dem Eingriffsbereich der Zahnräder 48, 50 des Zahnradtriebs 40 zugeführt werden.

Die Zuführleitung 46 ist als Heizelement, insbesondere als elektrische Heizlanze 46 ausgebildet, an der entlang das Schmieröl aus dem Sammelbehälter 44 ausströmen und schließlich über dem besagten Zahneingriffsbereich abtropfen kann.

Die Beheizung des Schmieröls erfolgt somit wiederum örtlich im Beölungsfluss (entlang der Heizlanze 46) zu den Zahnrädern 48, 50 und bewirkt schnell und effizient, insbesondere bei kaltem, zähviskosen Schmieröl, eine Erwärmung des Schmieröls bzw. eine Reduzierung der Quetsch- und Reibungsverluste im Zahnradtrieb 40.

Anstelle der beschriebenen Heizlanze 46 könnte auch eine beheizbare Ölleitung etc. vorgesehen sein. Ferner können bei mehreren Zahnradsätzen 48, 50 und/oder zur Versorgung anderer Schmierstellen entsprechend viele von dem Sammelbehälter 44 ausgehende, elektrisch beheizbare Zuführleitungen 46 vorgesehen sein.

Ergänzend kann durch eine entsprechende getaktete oder geringe Energiezufuhr das zumindest eine Heizelement eine Erwärmung des Schmieröls auch bei stehender Drehmomentübertragungseinrichtung erfolgen. Dies ist insbesondere bei Plug-in Antriebssystemen von Hybridkraftzeugen (mit Aufladung aus einem Stromnetz) vorteilhaft, um schon zu Startbeginn - besonders bei niedrigen Außentemperaturen - einen wirkungsgradoptimierten Betrieb der Drehmomentübertragungseinrichtung zu gewährleisten.

## Patentansprüche

1. Vorrichtung zur Konditionierung des Schmieröls einer Drehmomentübertragungseinrichtung für Kraftfahrzeuge, bei der das Schmieröl im kalten Zustand zur Verminderung von Reib- und Planschverlusten an den drehmomentübertragenden Getriebeelementen (16; 34) zumindest temporär über Heizelemente (26b; 28) beheizt ist, wobei zumindest ein Heizelement (26b; 28) bis zum Erreichen einer definierten Betriebstemperatur des Getriebeöls elektrisch beheizt ist und unmittelbar im Beölungsfluss der Getriebeelemente (16; 34) angeordnet ist, wobei das Heizelement (26b; 28) durch einen flächigen, im Ölfluss liegenden und strömungsgünstig ausgebildeten Heizkörper ausgeführt ist, **dadurch gekennzeichnet, dass** der Heizkörper durch eine parallel zur Ölströmungsrichtung (20) gekrümmte und über einen Umfangsbereich des eintauchenden Getriebeelements (16; 34) verlaufende Leitschaufel (28) gebildet ist.

2. Vorrichtung nach Anspruch 1, **dadurch gekennzeichnet, dass** bei Zahnradgetrieben (10; 30) mit zumindest einem in einen Ölsumpf (18; 38) eintauchenden Getriebeelement (16; 34) das Heizelement (26b; 28) in den im Ölsumpf (18; 38) sich bildenden Beölungsstrom positioniert ist.

3. Vorrichtung nach Anspruch 2, **dadurch gekennzeichnet, dass** das Heizelement (26b; 28) im Eintauchbereich (24) des Getriebeelements (16; 34) in den Ölsumpf (18; 38) angeordnet ist.

4. Vorrichtung nach Anspruch 2 oder 3, **dadurch gekennzeichnet, dass** bei einem Zahnradtrieb (10; 30) mit einem in den Ölsumpf (18; 38) eintauchenden Zahnrad (16; 34) mit einem definierten Radius (R) das Heizelement (26b; 28) innerhalb eines Abstands des 1,3-fachen des definierten Radius (R) positioniert ist.

5. Vorrichtung nach einem der vorhergehenden Ansprüche 1 bis 4, **dadurch gekennzeichnet, dass** bei einem Geschwindigkeits-Wechselgetriebe (10) für Kraftfahrzeuge mehrere Heizelemente (26b; 28) an verschiedenen Zahnradstufen eingesetzt sind.

6. Vorrichtung nach einem der vorhergehenden Ansprüche, **dadurch gekennzeichnet, dass** der Heizkörper (26b) im Querschnitt ein Tragflächenprofil aufweist.

## Claims

1. Device for conditioning the lubricating oil of a torque transmission device for motor vehicles, in which the lubricating oil in cold state is heated at least temporarily by means of heating elements (26b; 28) for reducing friction and splashing losses at the torque transmitting gear elements (16; 34), wherein at least one heating element (26b; 28) is electrically heated until it reaches a defined operational temperature of the gear oil and is arranged directly in the lubricating flow of the gear elements (16; 34), wherein the heating element (26b; 28) is in the form of a laminar heating body formed in a streamlined design lying in the oil flow, **characterised in that** the heating body is formed by a guide vane (28) bent parallel to the direction of oil flow (20) and extending across a circumferential region of the immersing gear element (16; 34).

2. Device according to claim 1, **characterised in that** in the case of cogwheel gears (10; 30) having at least one gear element (16; 34) immersing into an oil sump (18; 38) the heating element (26b; 28) is positioned into the lubricating flow forming in the oil sump (18; 38).

3. Device according to claim 2, **characterised in that** the heating element (26b; 28) in the immersion region (24) of the gear element (16; 34) is arranged into the oil sump (18; 38).

4. Device according to claim 2 or 3, **characterised in that** in the case of a gearwheel drive (10; 30) with a gearwheel (16; 34) having a defined radius (R) immersing into the oil sump (18; 38) the heating element (26b; 28) is positioned within a distance which is 1.3 times the defined radius (R).

5. Device according to any of the preceding claims 1 to 4, **characterised in that** in the case of a speed change gearbox (10) for motor vehicles several heating elements (26b; 28) are used at different gear stages.

6. Device according to any of the preceding claims, **characterised in that** the heating body (26b) has in cross-section an aerofoil profile.

## Revendications

1. Dispositif de conditionnement de l'huile de lubrification d'un dispositif de transmission de couple pour véhicules automobiles, dans lequel l'huile de lubrification est chauffée à l'état froid pour réduire les pertes par friction et par barbotage au niveau des éléments d'engrenage (16 ; 34) transmettant le couple au moins temporairement par le biais d'éléments de chauffage (26b ; 28), dans lequel au moins un élément chauffant (26b ; 28) est chauffé électriquement jusqu'à ce qu'une température de service définie de l'huile d'engrenage soit atteinte et est agencé directement dans le flux de graissage des éléments d'engrenage (16 ; 34), dans lequel l'élément chauffant (26b ; 28) est réalisé par un corps chauffant plat, situé dans le flux d'huile et réalisé favorable à l'écoulement, **caractérisé en ce que** le corps chauffant est formé par une aube directrice (28) incurvée parallèlement au sens d'écoulement d'huile (20) et s'étendant sur une zone circonférentielle de l'élément d'engrenage (16 ; 34) immergé.

2. Dispositif selon la revendication 1, **caractérisé en ce que** pour la transmission par engrenage (10 ; 30) avec au moins un élément d'engrenage (16 ; 34) immergé dans un carter d'huile (18 ; 38), l'élément chauffant (26b ; 28) est positionné dans le flux de graissage se formant dans le carter d'huile (18 ; 38).

3. Dispositif selon la revendication 2, **caractérisé en ce que** l'élément chauffant (26b ; 28) est agencé dans la zone d'immersion (24) de l'élément d'engrenage (16 ; 34) dans le carter d'huile (18 ; 38).

4. Dispositif selon la revendication 2 ou 3, **caractérisé en ce que** pour une transmission par engrenage (10; 30) avec une roue dentée (16 ; 34) immergée dans le carter d'huile (18 ; 38) avec un rayon défini (R), l'élément chauffant (26b ; 28) est positionné à l'intérieur d'une distance de 1,3 fois le rayon défini (R).

5. Dispositif selon l'une quelconque des revendications précédentes 1 à 4, **caractérisé en ce que** pour une boîte de vitesses (10) pour véhicules automobiles, plusieurs éléments chauffants (26b ; 28) sont utilisés à différents niveaux de roue dentée.

6. Dispositif selon l'une quelconque des revendications précédentes, **caractérisé en ce que** le corps chauffant (26b) présente un profil de surface portante dans la section transversale.
